# EUROPEAN PATENT SPECIFICATION

(11) **EP 2 991 892 B1**
(45) Date of publication and mention of the grant of the patent: **09.01.2019**
(21) Application number: 14714603.9
(22) Date of filing: 04.03.2014
(51) Int. Cl.: B62J 9/00

(54) **A BICYCLE BAG**
FAHRRADTASCHE
SAC DE BICYCLETTE

(30) Priority: 02.05.2013 DK 201300069
(43) Date of publication of application: 09.03.2016
(73) Proprietor: Gulmann & Lund ApS, 2100 Copenhagen Ø (DK)
(72) Inventor: GULMANN, Christian Nikolai, DK-2100 Copenhagen Ø (DK); LUND, Anders Helt, DK-1850 Frederiksberg C (DK)
(74) Representative: Inspicos P/S
(86) International application number: PCT/EP2014/054129
(87) International publication number: WO 2014/177305

(56) References cited:
- GB-A- 614 967
- GB-A- 623 353
- GB-A- 2 062 561
- US-A- 4 262 829
- US-A- 5 579 971

## Description

### INTRODUCTION

The present invention relates to a bicycle bag for carrying items on a bicycle, particularly for suspension on the rear rack of a bicycle.

The invention further relates to a bag attachment rail for a bicycle bag and to a shopping bag prepared for a bag attachment rail to thereby form a bicycle bag.

### BACKGROUND OF THE INVENTION

Shopping bags, particularly of the kind made from soft pliable sheet material, often referred to as "plastic bags", are widely used for regular shopping purpose. Typically, such bags are provided free of charge or sold for a very reasonable amount in supermarkets and other places of regular shopping. The shopping bags are typically disposed after one single use or they are reused only a few times.

The soft, pliable, sheet material is typically a plastic material such as PVC. This thin sheet material not only reduces the manufacturing costs, it also has an excellent ability to fold and the bags can therefore be compressed for convenient storage, e.g. under the cash register or supermarket conveyer belt, it adds very little to the weight, i.e. typically essentially nothing compared to the weight of the items being carried in the shopping bag, and it typically conforms to the shape of the carried items, and therefore provide a relatively storage space for the carried item.

Normally, the shopping bags include one or two handles for carrying the bag. Typically, however, these handles are unsuitable for suspension on a rack of a bicycle. Often they are not durable enough, and often they are located such that the centre of gravity (COG) becomes straight under, and in the middle between two handles. For this reason, the existing shopping bags tend to swing into the wheel of the bicycle and they tend to break quickly when attached to the rack.

Bicycle bags exist. Typically, they are strong and durable, and offers a good balance of the carried items, e.g. on the rack of the bicycle. They are typically made by expensive materials such as leather or canvas. The downside is that such bags are very expensive and they are not disposed after a single use. Accordingly, such bags are not sold at the register for carrying home the items, and the user must always remember to bring the bicycle bag when going shopping. Further, they are typically fixed to the bicycle in such a manner that removal or reattachment requires time and possibly also tools.

US 5579971, on which the preamble of claim 8 is based, discloses a carrier for attaching an article to a support rack of a bicycle. The carrier comprises a beam structure different dove-tail means hooks, and retaining means secured to the beam structure for engaging with the support rack so as to retain the beam on the support rack.

US4262829, on which the preamble of claim 1 is based, discloses bicycle pack with a bag structure having a rear wall of pliable material. The pack includes an upper attachment means adapted to be operably connected to a bicycle structure. The upper attachment means is positioned at the upper portion of the rear wall of the bag structure.

GB 623,353 discloses is a cycle saddle bag connector appliance with a steel rod which has been bent or conformed to provide a pair of longitudinal arm components each of doubled rod portions secured directly by rivets to a bag, or being received and held securely in a sleeve.

### DESCRIPTION OF THE INVENTION

It is an object of the invention to provide an improved and yet cheap and simple means for transporting items on a bicycle. Particularly, it is an object to improve bicycle transportation with disposable shopping bags.

According to a first aspect, the invention provides a bicycle bag comprising a bag attachment rail comprising an elongated body portion forming a front face, an opposite rear face, an upper edge and a lower edge extending between first and second end portions, and bicycle attachment means forming at least one suspension hook suitable for suspension of the bag e.g. on the rack of a bicycle.

The bicycle bag further comprises a shopping bag forming a transportation space for the items which are to be carried. The transportation space is between a front layer and a rear layer of a soft pliable sheet material, e.g. a plastic material, linen, or another fibre material, such as a material comprising glass fibres, carbon fibres, or other natural or synthetic fibres. The shape could e.g. be rectangular or quadrangular with a bottom edge and side edges extending upwards from the bottom towards a top edge. At least one of the bottom edge, side edges, and the top edge could e.g. be a straight edge.

To provide an easy and cheap fixation and to provide a good balance, the bag attachment rail is attached to one of the layers, namely the front layer, e.g. with the elongated body portion extending along the top edge.

Since the bag attachment rail is only attached to one of the layers, i.e. the front layer, the suspension stretches the front layer as opposed to the rear layer, and the risk of the bag getting entangled in the wheel of the bicycle is reduced.

The shopping bag may particularly be a plastic bag with two thin foils of a plastic material joined to each other by a joined forming the bottom edge and side edges, or made from a single sheet folded and joined along two opposing sides. The shopping bag may particularly be of a material with a thickness below 1 mm. such as in the range of 0,05-0,9 mm, such as in the range of 0,1-0,8 mm. The shopping bag may particularly form a space in the range of 2-20 litres such as in the range of 5-15 litres.

The front layer may comprise an inner surface facing towards the rear layer and an opposite outer surface forming an outer surface of the shopping bag, and, where the bag attachment rail is attached to the inner surface. Alternatively, the front layer may be curled about the bag attachment rail.

Each hook may extend through an opening formed in the front layer of the shopping bag, e.g. at a top edge of the front layer.

The front layer and rear layer could be made from the same material, e.g. a plastic material e.g. a foil material or a woven material. The front and rear layer could have the same thickness, or they could be identical. In one embodiment, the front and rear layers are made in one piece from a single sheet of soft pliable material which is folded and joined along two opposite edges e.g. adhesively or by welding such that the folded portion forms the bottom edge and the joined edges forms the side edges.

In one embodiment, the bag attachment rail forms a strap hook, e.g. formed between two suspension hooks. In this embodiment, the bag may further form a closure strap at the top edge. The closure strap being between the side edges and configured to be attached to the strap hook and thereby prevent or reduce the ability of the front layer and rear layer to separate at the opening. The closure strap may e.g. be formed as a loop of a sheet material, e.g. the same material by which the front layer and rear layer are formed, or it could be formed by an elastically deformable band, e.g. a rubber band.

the bag attachment rail is received in a pocket in the shopping bag. The pocket could e.g. be formed by the previously mentioned front layer which is curled about the bag attachment rail and attached to itself. The pocket may particularly be arranged closer to the top edge of the shopping bag than to the bottom edge of the shopping bag, e.g. at the top edge, or at a distance from the top edge being between 5- 40 percent of the height distance from the top edge to the bottom edge, such as between 5-20 percent of the height distance.

the bag attachment rail is located in a pocket formed in or by the front layer, the bag attachment rail is movable relative to the shopping bag. Particularly, the bag attachment rail may be movable in the direction between the side edges. This will allow adjustment of the position of the suspension hook relative to the shopping bag and thereby allow adjustment of the COG relative to the bicycle.

The attachment means may particularly form at least two suspension hooks at the opposite end portions. This may stabilise the shopping bag on a rack and prevent swinging of the shopping bag e.g. when starting or stopping the bicycle.

In a second aspect, the invention provides a bag attachment rail for suspension of a shopping bag on a bicycle, the bag attachment rail comprising an elongated body portion forming a front face, a rear face, an upper edge extending between first and second end portions, and first attachment means forming at least two suspension hooks at the opposite end portions. The bag attachment rail further comprises attachment means for detachable attachment of a shopping bag.

The attachment means may comprise a surface attachment structure adapted to bind the shopping bag to at least one of the front and rear face. The surface attachment structure may e.g. include an adhesive for adhesively binding to the front or rear face of the shopping bag or it may include a hook and loop type fastener structure such as Velcro™. In one embodiment, the adhesive may be designed repeatedly releasable attachment to a shopping bag. This will enable reuse of the bag attachment rail with different shopping bags. The adhesive could e.g. be a hydrocolloid adhesive.

In another embodiment, or in combination with the attachment structure, the elongated body comprises at least two body parts which are hinged to each other such that the front face can move relative to the rear face between an open configuration where the shopping bag can be received between the front and rear face and a closed configuration where the shopping bag is compressed between the front and rear faces. The bag attachment rail may comprise means for maintaining a position of the shopping bag between the two parts of the elongated body, e.g. the above mentioned adhesive or hook and loop type fasteners, or the bag attachment rail may comprise sharp pointed projections on one or both of the two body parts arranged towards the other body part to engage and potentially penetrate the shopping bag when moving from the open configuration to the closed configuration.

The projections on one body part may enter cavities in the other body part when the bag attachment rail is in the closed configuration. This may further prevent the shopping bag from being released from the bag attachment rail.

Additionally, the bag attachment rail according to the second aspect of the invention may have each of the features of the bag attachment rail of the bicycle bag according to the first aspect of the invention individually or in combination. Further, the bicycle bag according to the first aspect of the invention may include a bag attachment rail with each of the features of the bag attachment rail according to the second aspect of the invention individually or in combination.

In a third aspect, the invention provides a shopping bag for use with a bag attachment rail for suspension of the shopping bag on a bicycle. The shopping bag forms a space of shopping items between a front layer and a rear layer of a soft pliable sheet material, the bag having a bottom edge, side edges extending upwards from the bottom towards a top edge; the shopping bag further comprises attachment means for detachable attachment of a the bag attachment rail.

Additionally, the shopping bag according to the third aspect of the invention may have each of the features of the shopping bag according to the first aspect of the invention individually or in combination. Further, the bicycle bag according to the first aspect of the invention may include a shopping bag with each of the features of the shopping according to the third aspect of the invention individually or in combination.

The attachment means may comprises at least one pocket, e.g. formed by folding a portion of one of the front or rear layers. The pocket may form an at least partly enclosed space, e.g. along the top edge of the shopping bag. In this embodiment, the pocket may form an opening allowing a bag attachment rail to be inserted into the pocket. Additionally, the bag may form one or more openings for hooks of the bag attachment rail.

The attachment means may comprise a surface attachment structure adapted to bind the bag attachment rail to at least one of the front and rear layers, e.g. comprising an adhesive or a hook and loop fasteners structure. In one embodiment, the adhesive may include an adhesive designed for repeatedly releasable attachment to a shopping bag. This will enable reuse of the shopping bag with different bag attachment rails. The adhesive could e.g. be a hydrocolloid adhesive.

To improve the balance, the bottom edge may be curved in the upwards direction towards the side edges.

The invention may further provide a bicycle with a bicycle bag attached to a rack, and a method of attaching the aforementioned bag to a bicycle.

### LIST OF DRAWINGS

Embodiments of the invention will now be described in further details with reference to the drawings in which:
Figs. 1 and 2 illustrate a bicycle bag according to the invention.
Figs. 3a and 3b illustrate on embodiment of the bag attachment rail;
Figs 4 and 5 illustrate a suspension hook;
Fig. 6 illustrates a strap hook;
Fig. 7 illustrates the difference between a suspension and a strap hook;
Fig. 8 illustrates an embodiment of the bag attachment rail comprising two parts; and
Fig. 9 illustrates a cross section of the bag in an embodiment where the attachment rail is in a pocket.

### DETAILED DESCRIPTION OF EMBODIMENTS

It should be understood that the detailed description and specific examples, while indicating embodiments of the invention, are given by way of illustration only, since various changes and modifications within the spirit and scope of the invention will become apparent to those skilled in the art from this detailed description.

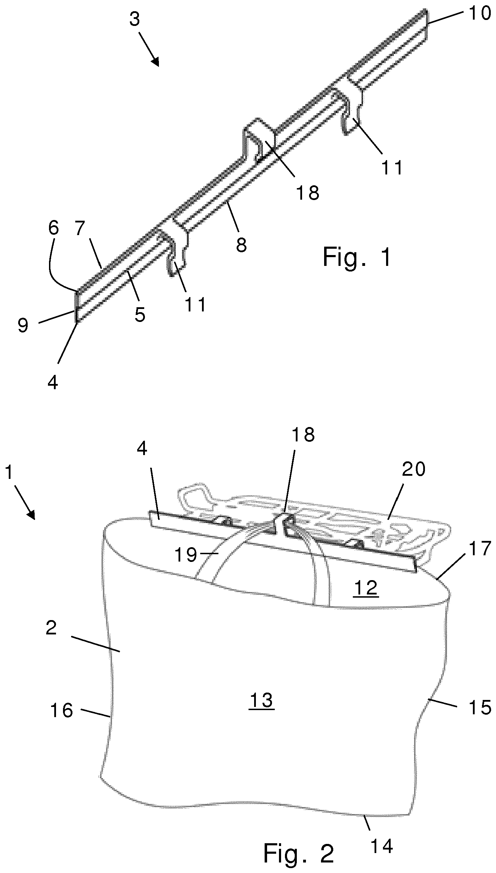

Fig. 1 illustrates a bag attachment rail and Fig. 2 illustrates the bag attachment rail being attached to a bag and holding the bag on a suspension rack of a bicycle.

The bicycle bag 1 comprises a shopping bag 2 and a bag attachment rail 3. The bag attachment rail comprises an elongated body portion 4 forming a front face 5, an opposite rear face 6, an upper edge 7, and a lower edge 8. The upper edge 7 and lower edge 8 extend between first and second end portions 9, 10.

For suspension of the bicycle bag e.g. on a rack of a bicycle, the bag attachment rail comprises bicycle attachment means forming two suspension hooks 11 at, or relatively close to the opposite end portions 9, 10.

The shopping bag 2 comprises a front layer 12 and a rear layer 13 of a soft pliable sheet material such as plastic foils. The shopping bag has a bottom edge 14, side edges 15, 16 extending upwards from the bottom edge towards a top edge 17.

Fig. 2 illustrates the bag attachment rail being attached to the front layer of the shopping bag with the elongated body portion 4 extending along the top edge 17. As illustrated, the attachment rail 3 is attached to the inner surface of the front layer 12, which faces the corresponding inner surface of the rear layer 13 of the shopping bag.

The illustrated shopping bag is made from a single blank of a foil material which is folded at the bottom edge 14 and welded along the side edges 15, 16.

In addition to the suspension hooks 11, the attachment rail 3 comprises a strap hook 18 which is located between the suspension hooks 11. Fig. 2 illustrates how the closure strap 19 at the top edge17 of the shopping bag 2 interacts with the strap hook 18 to keep the shopping bag closed, or at least to reduce the distance between the front and rear layers 12, 13 at the opening.

The bicycle bag is suspended by use of the suspension hooks 11 on a rack 20 of a bicycle.

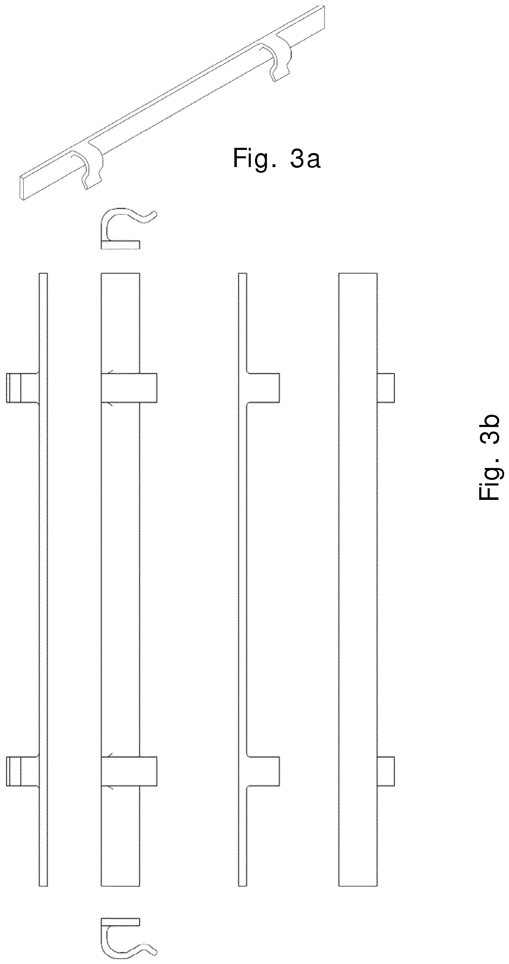

Whereas Fig. 1 illustrates an attachment rail for bicycle bag with suspension hooks and with a strap hook, Figs. 3a and 3b illustrate the attachment rail only with suspension hooks. Fig. 3a illustrates the attachment rail in a perspective view and Fig. 3b illustrates 6 different views of the attachment rail, namely a top, front, bottom, rear, right side, and left side views. The views are represented by European technical drawing representation.

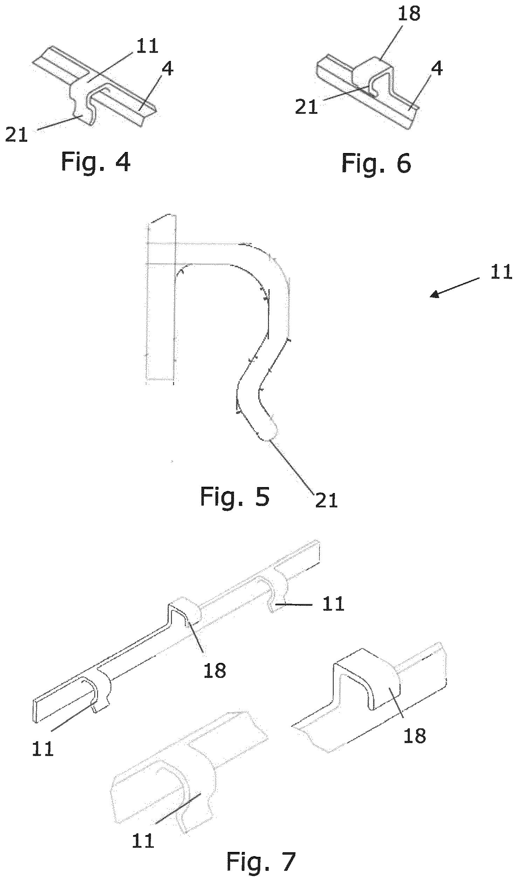

Figs. 4 and 5 illustrate the suspension hooks 11, and particularly illustrates that the suspension hook forms the shape of an inverted S where the tip 21 points outwards away from the elongated body portion 4. The tip 21 is made with a soft, rounded shape which facilitates attachment onto the rack.

Fig. 6 illustrates the strap hook, and illustrates that the strap hook 18 has a shape which is different from the shape of the suspension hooks. Particularly, the tip 21 of the strap hook points towards the elongated body portion 4.

The different shapes of the suspension and strap hooks are also illustrated in Fig. 7.

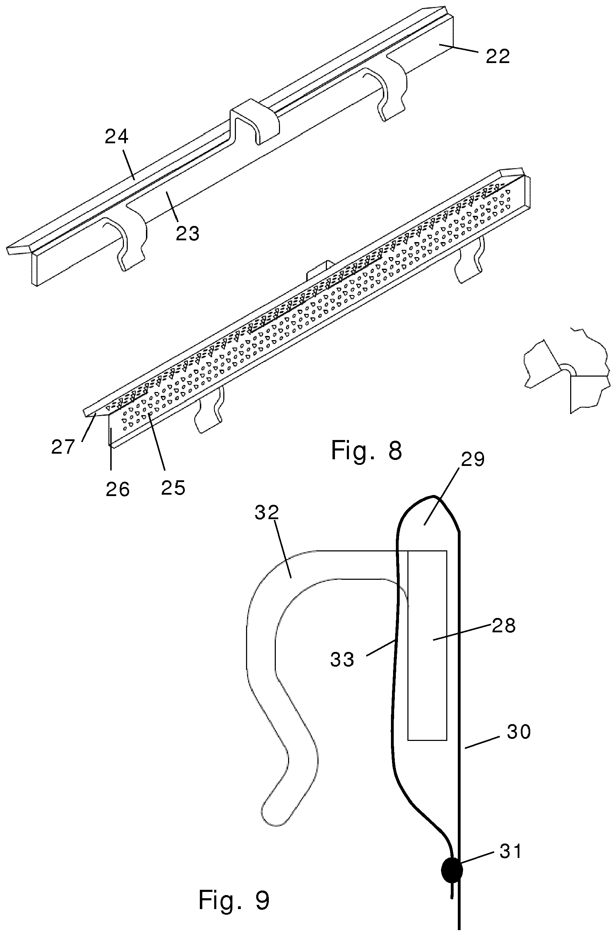

Fig. 8 illustrates an embodiment of a bag attachment rail 22 which has two separate body parts 23, 24. A first one of the body parts 23 forms the front face and the second one of the body parts 24 forms the rear face.

The first body part can be separated from the second body part and thereby reveals a surface attachment structure 25 which can hold the shopping bag fixed between the body parts. In the illustrated embodiment, the surface attachment structure 25 is in the form of projection arranged to penetrate the shopping bag. The projections are formed on the inner surfaces 26, 27 of the two body parts 23, 24. In an alternative embodiment, the surface attachment structure 25 is in the form of an adhesive, or in the form of a hook-and-loop fastener structure, e.g. of the kind known as Velcro.

In the disclosed embodiment, the first body part is connected to the second body part by a hinge joint allowing pivoting of the body parts relative to each other.

In an alternative embodiment, the bag attachment rail is in one piece, and the surface attachment structure 25 is formed directly on the rear face or on the front face.

Fig. 9 illustrates a cross section of the bag in an embodiment where the elongated body 28 of the bag attachment rail is received in a pocket 29 in the shopping bag. The pocket is formed by the front layer 30 being folded and attached to itself by a welding 31. The pocket is arranged at, and forms the top edge of, the shopping bag. In the disclosed embodiment, the bag attachment rail is movable relative to the shopping bag inside the pocket, and the suspension hook 32 extends out of the pocket through openings in the folded portion 33 of the front layer 30.

## Claims

1. A bicycle bag (1) comprising a shopping bag (2) and a bag attachment rail (3) for suspension of the bicycle bag on a bicycle (20);
- the bag attachment rail (3) comprising an elongated body portion (4) forming a front face (5), an opposite rear face (6), an upper edge (7) and a lower edge (8) extending between first and second end portions (9,10), and bicycle attachment means forming at least one suspension hook (11);
- the shopping bag (2) forming space for carrying shopping items between a front layer (12) and a rear layer (13) of a soft pliable sheet material, the shopping bag (2) having a bottom edge (14), side edges (15) extending upwards from the bottom towards a top edge (17);
where the bag attachment rail is attached to the front layer (12), and where the bag attachment rail (3) is attached with the elongated body portion extending along the top edge (17), wherein the bag attachment rail is received in a pocket in the shopping bag (2); **characterized in that** the bag attachment rail (3) is movable relative to the shopping bag (2).

2. A bag according to any of the preceding claims, where the front layer (12) is curled about the bag attachment rail (3).

3. A bag according to any of the preceding claims, where each hook (11) extends through an opening formed at a top edge (17) of the shopping bag (2).

4. A bag according to any of the preceding claims, where the front layer (12) and rear layer (13) are made from the same material.

5. A bag according to any of the preceding claims, where the front layer (12) and rear layer (13) are constituted by sheets having the same thickness.

6. A bag according to any of the preceding claims, where the bag attachment rail (3) forms a strap hook (18) between the suspension hooks (11) and where the bag forms a closure strap at the top edge (17), the closure strap being between the side edges and configured to be attached to the strap hook (18) and thereby prevent or reduce the ability of the front layer (12) and rear layer (13) to separate at the opening.

7. A bag according to any of the preceding claims, where the pocket is arranged closer to the top edge (17) of the shopping bag (2) than to the bottom edge of the shopping bag (2).

8. A bag attachment rail for suspension of a shopping bag (2) on a bicycle, the bag attachment rail comprising an elongated body portion forming a front face, a rear face, an upper edge (7) extending between first and second end portions, and first attachment means forming at least two suspension hooks (11) at the opposite end portions; wherein the bag attachment rail further comprises attachment means for detachable attachment of a shopping bag (2); **characterized in that** the elongated body comprises at least two separate body parts (23, 24), one forming the front face and one forming the rear face, the separate body parts facilitating an open configuration where the shopping bag (2) can be received between the body parts and a closed configuration where the shopping bag (2) is compressed between the body parts, and where the attachment means is configured to maintain a position of the shopping bag (2) between the two parts of the elongated body.

9. A bag attachment rail according to claim 8, where the attachment means comprises projection arranged to penetrate the shopping bag (2).

10. A bag attachment rail according to claim 9, where the projections on one of the body parts enter cavities in another body part when the bag attachment rail is in the closed configuration.

## Patentansprüche

1. Fahrradtasche (1), umfassend eine Einkaufstasche (2) und eine Taschenanbringungsschiene (3) zur Aufhängung der Fahrradtasche an einem Fahrrad (20),
- wobei die Taschenanbringungsschiene (3) einen länglichen Körperabschnitt (4), der eine Vorderfläche (5), eine gegenüberliegende Rückfläche (6), einen oberen Rand (7) und einen unteren Rand (8) bildet, der sich zwischen dem ersten und zweiten Endabschnitt (9, 10) erstreckt, und ein Fahrradanbringungsmittel, das mindestens einen Aufhängungshaken (11) bildet, umfasst,
- wobei die Einkaufstasche (2) einen Raum zum Tragen von Einkaufsgegenständen zwischen einer vorderen Schicht (12) und einer hinteren Schicht (13) eines weichen faltbaren Blattmaterials bildet, wobei die Einkaufstasche (2) einen unteren Rand (14), Seitenränder (15), die sich nach oben von dem unteren hin zu einem oberen Rand (17) erstrecken, hat,
wobei die Taschenanbringungsschiene an der vorderen Schicht (12) angebracht ist und wobei die Taschenanbringungsschiene (3) mit dem länglichen Körperabschnitt, der sich entlang des oberen Rands (17) erstreckt, angebracht ist, wobei die Taschenanbringungsschiene in einem Fach in der Einkaufstasche (2) aufgenommen ist, **dadurch gekennzeichnet, dass** die Taschenanbringungsschiene (3) relativ zu der Einkaufstasche (2) bewegbar ist.

2. Tasche nach einem der vorhergehenden Ansprüche, wobei die vordere Schicht (12) um die Taschenanbringungsschiene (3) gerollt ist.

3. Tasche nach einem der vorhergehenden Ansprüche, wobei sich jeder Haken (11) durch eine Öffnung erstreckt, die an einem oberen Rand (17) der Einkaufstasche (2) gebildet ist.

4. Tasche nach einem der vorhergehenden Ansprüche, wobei die vordere Schicht (12) und hintere Schicht (13) aus dem gleichen Material hergestellt sind.

5. Tasche nach einem der vorhergehenden Ansprüche, wobei die vordere Schicht (12) und hintere Schicht (13) aus Blättern mit der gleichen Dicke bestehen.

6. Tasche nach einem der vorhergehenden Ansprüche, wobei die Taschenanbringungsschiene (3) einen Bandhaken (18) zwischen den Aufhängungshaken (11) bildet und wobei die Tasche ein Verschlussband an dem oberen Rand (17) bildet, wobei das Verschlussband zwischen den Seitenrändern und konfiguriert ist, um an dem Bandhaken (18) angebracht zu werden und dadurch die Fähigkeit der vorderen Schicht (12) und hinteren Schicht (13), sich an der Öffnung zu trennen, zu verhindern oder zu reduzieren.

7. Tasche nach einem der vorhergehenden Ansprüche, wobei das Fach näher zu dem oberen Rand (17) der Einkaufstasche (2) angeordnet ist als zu dem unteren Rand der Einkaufstasche (2).

8. Taschenanbringungsschiene zur Aufhängung einer Einkaufstasche (2) an einem Fahrrad, wobei die Taschenanbringungsschiene einen länglichen Körperabschnitt, der eine Vorderfläche, eine Rückfläche, einen oberer Rand (7), der sich zwischen einem ersten und zweiten Endabschnitt erstreckt, und ein erstes Anbringungsmittel, das mindestens zwei Aufhängungshaken (11) an den gegenüberliegenden Endabschnitten bildet, umfasst, wobei die Taschenanbringungsschiene ferner ein Anbringungsmittel zur abnehmbaren Anbringung einer Einkaufstasche (2) umfasst, **dadurch gekennzeichnet, dass** der längliche Körper mindestens zwei separate Körperteile (23, 24) umfasst, wobei einer die Vorderfläche bildet und einer die Rückfläche bildet, wobei die separaten Körperteile eine offene Konfiguration, in der die Einkaufstasche (2) zwischen den Körperteilen aufgenommen werden kann, und eine geschlossene Konfiguration, in der die Einkaufstasche (2) zwischen den Körperteilen komprimiert ist, ermöglichen und wobei das Anbringungsmittel konfiguriert ist, um eine Position der Einkaufstasche (2) zwischen den zwei Teilen des länglichen Körpers aufrecht zu erhalten.

9. Taschenanbringungsschiene nach Anspruch 8, wobei das Anbringungsmittel einen Vorsprung umfasst, der angeordnet ist, um in die Einkaufstasche (2) einzudringen.

10. Taschenanbringungsschiene nach Anspruch 9, wobei die Vorsprünge auf einem der Körperteile in Hohlräume in einem anderen Körperteil eindringen, wenn die Taschenanbringungsschiene in der geschlossen Konfiguration ist.

## Revendications

1. Sac de bicyclette (1) comprenant un sac à provisions (2) et un rail de fixation de sac (3) pour la suspension du sac de bicyclette sur une bicyclette (20) ;
- le rail de fixation de sac (3) comprenant une partie de corps allongée (4) formant une face avant (5), une face arrière (6) opposée, un bord supérieur (7) et un bord inférieur (8) s'étendant entre des première et deuxième parties d'extrémité (9, 10), et un moyen de fixation de bicyclette formant au moins un crochet de suspension (11) ;
- le sac à provisions (2) formant un espace permettant de transporter des articles entre une couche avant (12) et une couche arrière (13) d'un matériau en feuille pliable souple, le sac à provisions (2) comportant un bord inférieur (14), des bords latéraux (15) s'étendant vers le haut à partir du bord inférieur vers un bord supérieur (17) ;
où le rail de fixation de sac est fixé à la couche avant (12), et où le rail de fixation de sac (3) est fixé avec la partie de corps allongée s'étendant le long du bord supérieur (17), dans lequel le rail de fixation de sac est reçu dans une poche dans le sac à provisions (2) ; **caractérisé en ce que** le rail de fixation de sac (3) est mobile par rapport au sac à provisions (2).

2. Sac selon la revendication précédente, dans lequel la couche avant (12) est enroulée autour du rail de fixation de sac (3).

3. Sac selon l'une quelconque des revendications précédentes, dans lequel chaque crochet (11) s'étend à travers une ouverture formée au niveau du bord supérieur (17) du sac à provisions (2).

4. Sac selon l'une quelconque des revendications précédentes, dans lequel la couche avant (12) et la couche arrière (13) sont constituées du même matériau.

5. Sac selon l'une quelconque des revendications précédentes, dans lequel la couche avant (12) et la couche arrière (13) sont constituées de feuilles présentant la même épaisseur.

6. Sac selon l'une quelconque des revendications précédentes, dans lequel le rail de fixation de sac (3) forme un crochet de sangle (18) entre les crochets de suspension (11) et dans lequel le sac forme une sangle de fermeture au niveau du bord supérieur (17), la sangle de fermeture se trouvant entre les bords latéraux et étant configurée pour être fixée au crochet de sangle (18), empêchant ou réduisant ainsi la capacité de la couche avant (12) et de la couche arrière (13) à se séparer au niveau de l'ouverture.

7. Sac selon lus des revendications précédentes, dans lequel la poche est disposée plus près du bord supérieur (17) du sac à provisions (2) que du bord inférieur du sac à provisions (2).

8. Rail de fixation de sac permettant d'accrocher un sac à provisions (2) sur une bicyclette, le rail de fixation de sac comprenant une partie de corps allongée formant une face avant, une face arrière, un bord supérieur (7) s'étendant entre des première et deuxième parties d'extrémité, et des premiers moyens de fixation formant au moins deux crochets de suspension (11) au niveau des parties d'extrémité opposées ; dans lequel le rail de fixation de sac comprend en outre un moyen de fixation pour la fixation détachable d'un sac à provisions (2) ; **caractérisé en ce que** le corps allongé comprend au moins deux parties de corps séparées (23, 24), l'une formant la face avant et l'autre formant la face arrière, les parties de corps séparées facilitant une configuration ouverte dans laquelle le sac à provisions (2) peut être reçu entre les parties de corps et une configuration fermée dans laquelle le sac à provisions (2) est comprimé entre les parties de corps, et le moyen de fixation étant configuré pour garder une position du sac à provisions (2) entre les deux parties du corps allongé.

9. Rail de fixation de sac selon la revendication 8, dans lequel le moyen de fixation comprend une saillie conçue pour pénétrer dans le sac à provisions (2).

10. Rail de fixation de sac selon la revendication 9, dans lequel les saillies de l'une des parties de corps entrent dans des cavités dans une autre partie de corps lorsque le rail de fixation de sac est dans la configuration fermée.
